# EUROPEAN PATENT SPECIFICATION

(11) **EP 1 505 865 B1**
(45) Date of publication and mention of the grant of the patent: **19.11.2008**
(21) Application number: 03725881.1
(22) Date of filing: 07.05.2003
(51) Int. Cl.: A01C 11/02

(54) **PLANTING MACHINE PROVIDED WITH A SINGULATING SYSTEM HAVING A BREAKING MECHANISM, AND SINGULATING SYSTEM AS SUCH**
PFLANZMASCHINE MIT EINEM VEREINZELUNGSSYSTEM MIT BRECHMECHANISMUS, UND VEREINZELUNGSSYSTEM ALS SOLCHES
MACHINE A PLANTER COMPRENANT UN SYSTEME DE SEPARATION QUI PRESENTE UN MECANISME DE FREINAGE, ET SYSTEME DE SEPARATION CORRESPONDANT

(30) Priority: 07.05.2002 NL 1020548; 07.05.2002 NL 1020549; 07.05.2002 NL 1020550; 14.02.2003 NL 1022697
(43) Date of publication of application: 16.02.2005
(73) Proprietor: Bruygom, Dirk, 5317 JD Nederhemert (NL)
(72) Inventor: Bruygom, Dirk, 5317 JD Nederhemert (NL)
(74) Representative: Winckels, Johannes Hubertus F.
(86) International application number: PCT/NL2003/000338
(87) International publication number: WO 2003/094594

(56) References cited:
- FR-A- 2 801 168
- NL-A- 7 713 803
- NL-A- 7 806 949
- US-A- 4 289 080
- US-A- 4 307 827

## Description

The invention relates to a planting machine for planting germinated or ungerminated plants, comprising a transport system for transporting to deposit locations of the planting machine plants supplied in a sheet with plants to the planting machine, a singulating system for singulating the sheet with plants to obtain singulated plants, and a planting system for planting the singulated plants from the deposit locations in the planting locations, the transport system being arranged for transporting the sheet with plants to the singulating system and for transporting the singulated plants to the deposit locations.

The invention further relates to a singulating system for a planting machine according to the invention.

Such a planting machine is known and is described, for instance, in the United States patent specification US 4,289,080. The known planting machine has a singulating system with two singulators. With the first singulator of the known planting machine, rows of plants oriented in a feeding direction of the supplied sheet are sawn from the supplied sheet with plants. Next, the thus sawn rows are further transported in the feeding direction through transport tubes to planting locations. At the ends of the transport tubes, there are openings provided with detainers. The supplied rows with plants are detained by these detainers, after which the second singulator can singulate plants of the row with plants by pulling them loose. The singulated plants are thereupon gripped by grippers of the planting system and transferred to planting locations in parallel furrows provided in the soil. The planting system of the known planting machine consists of a rotor on which a number of arms provided with grippers are mounted. During planting, the planting machine moves in the direction of travel and the rotor rotates such that the grippers with regularity take off singulated plants from the second singulator and transfer them to the respective planting locations.

A disadvantage of the known planting machine is that at singulation, due to the first singulator, relatively much crumbling of the sheet with plants occurs. This is a consequence of the fact that the sheet with plants is singulated by sawing it. The crumbs thereby caused can cause faults in the planting machine. There is further the risk that due to positional errors of the sheet relative to the first singulator, the sheet is singulated in undesirable places. Usually, the sheet with plants has previously been provided with separation lines (marked by a local deepening or notch in the sheet). If a (possibly minor) positional error of the sheet relative to the first singulator occurs, sawing is not effected along a separation line but, for example, right next to the separation line. A consequence of this is that the singulated rows do not all obtain the desired dimensions, which upon further processing by the planting machine can lead to problems. Furthermore, a saw cut right next to a deepened separation line can lead to extra crumbling.

Another planting machine is known from French patent publication FR 2801168, which uses a mechanism for singulating plants by means of breaking. This known breaking mechanism employs clamping means that clamp each individual plant at its lateral faces. In such an arrangement the breaking movement is in the plane of the breakline and this would seem at best only practical for breaking off one plant at the time. Moreover there is no certainty that the location of the break can be reliably predicted or that crumbling can be effectively avoided.

The object of the invention is to meet the above-mentioned drawbacks. To that end, the planting machine according to the invention is characterized in that the singulating system is provided with at least one breaking mechanism for singulating the sheet with plants by means of breaking, while the at least one breaking mechanism is provided with clamping means for clamping, at an underside and an upper side of at least one of the plants, the at least one plant for the purpose of breaking the at least one clamped plant loose from at least one of the other plants.

One aspect of the present invention is its use of a first singulator for separating a row of plants from a sheet and a second singulator for separating individual plants from the separated rows. By this arrangement it has become possible to distribute the plants to the planting location completely independent of the number of rows of plants in a sheet.

Due to the at least one plant being clamped at an upper side and underside before tearing, a firm clamping is obtained for the purpose of tearing. If the at least one plant were clamped laterally, during tearing a shearing between the at least one plant and the clamping means could take place relatively easily. By virtue of the tearing, moreover, at least a part of the drawbacks mentioned are met.

In particular, the singulating system is provided with a first singulator for splitting off a row with plants from the sheet with plants by measn of breaking, the first singulator being provided with clamping means for clamping, at an underside and an upper side of a row of plants of a sheet, the row of plants of the sheet for breaking the clamped row of plants loose from the sheet. Due to the row with plants being clamped at an upper side and underside, a firm clamping is obtained for the purpose of tearing. If the row were clamped laterally, during tearing a shearing between the at least one row with plants and the clamping means could take place relatively easily. Also, in case of a lateral clamping, a row of plants may become compressed relatively easily. Further, a lateral clamping of individual plants of a row with plants would present many problems because the positioning of the clamping means relative to the individual plants then becomes very critical.

The breaking mechanism can be provided with a breaking clamp with which a row with plants of the sheet with plants is clamped and is subsequently, for instance through a rotary movement, is broken loose from the sheet. Preferably, the row is thereby broken off along a separation line previously provided in the sheet with plants. Thus, a first advantage is gained over the known cutting or sawing of rows from the sheet, in that small positional errors of the sheet relative to the singulator, the row is still split off or singulated along the previously provided separation line. As a result, the split-off row will have correct dimensions. Also, a second advantage is gained whereby undue crumbling of the sheet with plants is prevented.

A preferred embodiment of the planting machine according to the invention is characterized in that the singulating system further comprises a second singulator for singulating plants from the split-off rows with plants. Here, the second singulator, like the first singulator, may be provided with a breaking mechanism for singulating plants from the split-off rows with plants by means of breaking. Here, too, a reduced crumbling as well as an accurate singulation along previously provided separation lines is achieved. It is noted that it is also possible that the second singulator is provided with a breaking mechanism while the first singulator is not provided with a breaking mechanism or the other way around.

Further, in the preferred embodiment mentioned, the split-off rows with plants can be placed behind each other in at least one row to be subsequently singulated by the second singulator into individual singulated plants, whereupon the singulated plants can be transported to the deposit locations. Due to the plants being placed behind each other, it is possible to simply adapt the planting machine to modifications in the structure or the pattern of the planting locations without this requiring the dimensions of the sheet with plants to be modified. Also, sheets of various dimensions can be supplied. Thus, a flexible planting machine is obtained.

An advanced embodiment of the planting machine according to the invention is characterized in that the first singulator is provided with at least one clamp for clamping the sheet with plants during the splitting off of a row with plants. What is thus achieved is that the splitting off of a row with plants is not hindered by the propulsive action of the residual sheet with plants. This propulsive action is caused by the transport system which transports the sheet with plants to the first singulator. Due to the sheet with plants being clamped temporarily by the respective clamp, the propulsive action is briefly interrupted, so that the row with plants can easily be split off from the sheet with plants.

An embodiment of the planting machine according to the invention is characterized in that the second singulator is provided with at least one clamp for clamping the residual row with plants while a plant is being split off from the split-off row with plants. What is thus achieved is that the splitting off of a plant is not hindered by the propulsive action of the residual row with plants. This propulsive action is caused by the transport system which transports the split-off row with plants to the second singulator. Due to the split-off row with plants being clamped temporarily by the respective clamp, the propulsive action is briefly interrupted, so that the plant can easily be split off from the row with plants.

One embodiment of the planting machine is characterized in that the transport system is arranged for forming a buffer of plants, by placing the split-off rows upstream of the second singulator behind each other in the row. By thus forming a buffer, a continuous supply to the planting system can be ensured. As a result, it is possible to achieve a relatively high planting speed. Also, in that case, a high planting density can be achieved, while the plants are planted in a flexible manner with a high density and are preferably supplied and planted relatively fast.

In a preferred embodiment, the transport system is arranged for transporting the sheet in a first direction to the first singulator, and the first singulator is arranged for splitting off the rows with plants in a split-off direction, the transport system being arranged for transporting the split-off rows with plants in a second direction to the second singulator.

Due to the transport system being arranged for transporting the sheet in a first direction to the first singulator, and the first singulator being arranged for splitting off the rows with plants transversely to the first direction, while the transport system is arranged for transporting the split-off row with plants in a second direction directed transverse to the first direction to the second singulator, the supply of plants to the second singulator is independent of the number of plants in a sheet (that is, independent of the number of rows in a sheet and the number of plants in a row). The transport system is then preferably characterized in that the transport system is further arranged for transporting the plants singulated by the second singulator at least in a third direction to the deposit locations. Preferably, the first direction substantially coincides with a direction of travel of the planting machine and the third direction is oriented transverse to the direction of travel of the planting machine. With this embodiment, a compact planting machine is provided, whereby a buffer is realized upstream of the second singulator in an efficient manner.

One embodiment of the planting machine according to the invention is characterized in that the transport system is provided with a deposit shelf, while the transport system is arranged for transporting the respective singulated plants to respective deposit locations on the deposit shelf. If the third direction in which the singulated plants are supplied is also directed perpendicular to the direction of travel, the singulated plants can be transferred efficiently to the respective deposit locations on the deposit shelf and regrouped on it. Due to the deposit shelf being oriented substantially perpendicularly to the direction of travel of the planting machine, also a compact planting machine can be realized. This is an advantage because the weight of the planting machine can thus be limited. Especially when a planting machine is used that is movable on a rail connection, it is desired that the planting machine has a relatively small weight. A planting machine of small dimensions according to the invention can be realized by choosing the first direction to be substantially parallel to the direction of travel, choosing the second direction to be substantially perpendicular to the direction of travel, and choosing the third direction to be likewise perpendicular to the direction of travel. Thus, a relatively compact planting machine of a relatively small weight can be realized, by which, in a flexible manner, an ordering or regrouping of plants to be planted, on the respective deposit locations on the deposit shelf is achieved.

According to a planting machine according to the invention, the planting system comprises a plurality of grippers mounted on a frame, the planting machine being arranged for controlling the grippers, whereby, in use, a controlled gripper of the plurality of grippers performs a substantially vertical movement whereby a plant is gripped from one of the deposit locations of the deposit shelf and is planted in a planting location. This embodiment is suitable in particular for planting plants in a fine-meshed (planting) grid provided on or in the soil. Owing to the plants being planted in the grid in a vertical manner, a high planting speed is possible without the grippers getting entangled in the grids. Such (planting) grid is often used by growers for planting the plants with a high density. One of the tasks of the grid is to offer support to the plants during and after planting. A relatively high fineness of mesh is required here, which means in practice that grid dimensions of 10 to 15 cm are used. By virtue of the vertical planting, the planting machine can have a relatively high traveling speed, while reliably and efficiently enabling a relatively high planting density to be achieved.

One embodiment of the planting machine according to the invention is characterized in that the deposit shelf is movable relative to the frame, and that the planting machine is arranged for controlling the deposit shelf, whereby, in use, after plants have been gripped from deposit locations of the deposit shelf by the controlled grippers, the controlled deposit shelf is displaced for clearing space for the vertical movements of the controlled grippers. This further elaborated embodiment results in a particularly efficient planting machine, whereby the feed-through rate of the plants to be planted has been optimized. This is because during the planting of a first generation of plants by the controlled grippers, a second generation of plants can be supplied from the third direction and be set in readiness on the deposit locations of the deposit shelf. Here, the controlled grippers can synchronously, directly after the first generation of plants has been planted, assume their original starting position, while the deposit shelf with the second generation of plants is placed under the grippers, so that the controlled grippers can synchronously start a new planting cycle with the second generation of plants to be planted.

According to an embodiment of the planting machine according to the invention, the transport system is provided with a first conveyor belt for transporting the sheet with plants in the first direction, and a second conveyor belt for transporting the row with plants in the second direction. Preferably, the transport system is further provided with a third transport device for transporting singulated plants in the third direction, and a push-off unit for pushing respective singulated plants from the third transport device to respective deposit locations on the deposit shelf. The planting machine is preferably arranged for providing the third transport device with singulated plants via the second singulator during the vertical movements performed by the controlled grippers, so that a continuous feed-through of plants is accomplished. In the case where the third direction is directed perpendicularly to the direction of travel of the planting machine, the third transport device can be mounted parallel to and in the proximity of the deposit shelf, so that the push-off unit can push the plants from the third transport device to the deposit locations on the deposit shelf. Preferably, the third transport device is a flap conveyor belt, with the flaps forming compartments for receiving plants. However, the third transport device can also be a smooth belt, with the rotary speed of the belt determining the size of the "compartments". Through adjustment of the rotary speed, a different spacing between the plants can then be realized.

An embodiment of the planting machine according to the invention is characterized in that the transport system is arranged for controlling the speed of the third transport device, whereby, in use, the third transport device is stopped relative to the frame, for the purpose of pushing the split-off plants off the third transport device to the deposit locations. The third transport device is here stopped such that the compartments of the third transport device filled with plants to be planted are situated opposite the respective deposit locations on the deposit shelf. Next, the plants can be pushed from the compartments to the deposit locations by the push-off unit. Preferably, the second singulator is then arranged, while the plants are being pushed by the push-off unit, to push a plant singulated by the second singulator to a deposit location situated at an end of the deposit shelf. Thus a far-reaching optimization of the feed-through of plants to be planted to the eventual deposit locations is obtained in that the second singulator can function virtually without interruption. Thus a relatively high planting capacity of the planting machine is achieved.

A particularly advanced embodiment of the planting machine according to the invention is characterized in that the planting machine is provided with a central control unit which, directly or indirectly, is connected with the transport system, the singulating system and the planting system, while the central control unit can be set for a particular planting program, whereby the planting program determines the pattern of planting locations, and the central control unit is arranged for controlling the transport system, the singulating system and the planting system in conformity with the planting program set. The central control unit gives the planting machine an additional flexibility, allowing variable planting patterns of planting locations to be set, depending on, for instance, the season. The central control unit can control the transport system, the singulating system and the planting system, such that only particular compartments of the third coveyor belt are filled with a plant to be planted. In this way, the planting distance between planting locations in a direction perpendicular to the direction of travel can be controlled. Further, it is possible to modify this planting distance by providing the planting machine with a different third transport device having different dimensions of the compartments, and to adjust the settings of the other systems (transport system, singulating system, planting system) of the planting machine accordingly. Also, the distance between the grippers can be varied during planting for modifying the planting distance. The planting distances to be employed in the direction perpendicular to the direction of travel are sometimes imposed by a grid size in this direction of a grid, arranged on the soil, in which the plants are to be planted. The planting distance between planting locations in the direction of travel can also be modified by the central control unit. The central control unit may then control the systems of the planting machine depending on the grid size in the direction of travel and the desired traveling speed of the planting machine. Optionally, particular grids in the direction of travel may be skipped.

An embodiment of the planting machine according to the invention is characterized in that the planting machine is provided with a position sensor for determining the position of the planting machine relative to a wire netting or planting grid arranged on the soil. The position of the planting machine thus measured by the position sensor can be passed on to the central control unit, while the central control unit controls the transport system, the singulating system, and the planting system, depending on the traveling speed, the grid size, the position of the planting machine, and the planting program set, as well as depending on other parameters, such as any correction factors for a misaligned grid.

According to an advanced embodiment of the planting machine according to the invention, the planting machine is provided with a spraying device arranged adjacent the planting system, for instance grippers of the planting system, for the purpose of spraying the plants to be planted by the grippers with a plant protection agent. When a plant has been gripped by a gripper from a deposit location of the deposit shelf, it is possible, using the spraying device, to spray an underside of the plant, or the (pressed) pot in which the plant is taken up, with the plant protection agent. As only the underside and optionally a part of the side of the plant, or the (pressed) pot in which the plant is taken up, needs to be treated, the amount of plant protection agent to be used can be limited with respect to the known situation where the soil in the grid is to be treated with plant protection agent.

A practical embodiment of the planting machine according to the invention is characterized in that the planting machine is provided with a supply system for supplying to the planting machine a sheet with plants in a box with an open front and an open top, the supply system being provided with a shaking mechanism for shaking the sheet loose relative to the box, and the supply system being provided with a movable slide with a first and/or a second function, the first function of the slide being to close off the open front of the box during shaking and the second function of the slide being to push the sheet with plants, after shaking, in the first direction through the open front of the box.

The singulating system according to the invention is characterized in that the singulating system is provided with a breaking mechanism for singulating the sheet with plants by means of breaking.

The invention will presently be further elucidated with reference to the drawing. In the drawing:
Fig. 1 schematically shows a perspective view of the planting machine according to the invention;
Fig. 2 schematically shows a perspective view of a part of the planting machine according to Fig. 1, showing a push-off unit of the planting machine, a second singulator, a first embodiment of a third transport device and a deposit shelf of the planting machine;
Fig. 3 schematically shows in top plan view the principle of the operation of a planting machine according to the invention;
Figs. 4a-4f schematically show in side elevation the operation of a first singulator of a planting machine according to the invention, with the first singulator shown in six respective phases;
Fig. 5a shows a second singulator of a planting machine according to the invention, with the second singulator shown in a first phase;
Fig. 5b schematically shows the operation of the second singulator according to Fig. 5a, with the second singulator shown in a second phase;
Figs. 6a-6e schematically show in top plan view the (co)operation of a second conveyor belt, the first embodiment of the third transport device, a movable deposit shelf and a second singulator of a planting machine according to the invention in five respective phases;
Figs. 7a-7e schematically show in side elevation the (co)operation of the second conveyor belt, a second embodiment of the third transport device, the movable deposit shelf, the second singulator and grippers of the planting system of the planting machine according to Fig. 6 in five respective phases that correspond to the five respective phases in Figs. 6a-6e;
Figs. 8a-8h schematically show in side elevation the operation of the supply system of a planting machine according to the invention in eight respective phases;
Fig. 9 shows a controlled gripper, which has gripped a plant to be planted, allowing the underside of the plant or the pot of the plant to be sprayed with a plant protection agent;
Fig. 10 shows a controlled gripper which has gripped a plant to be planted in a (planting) grid.

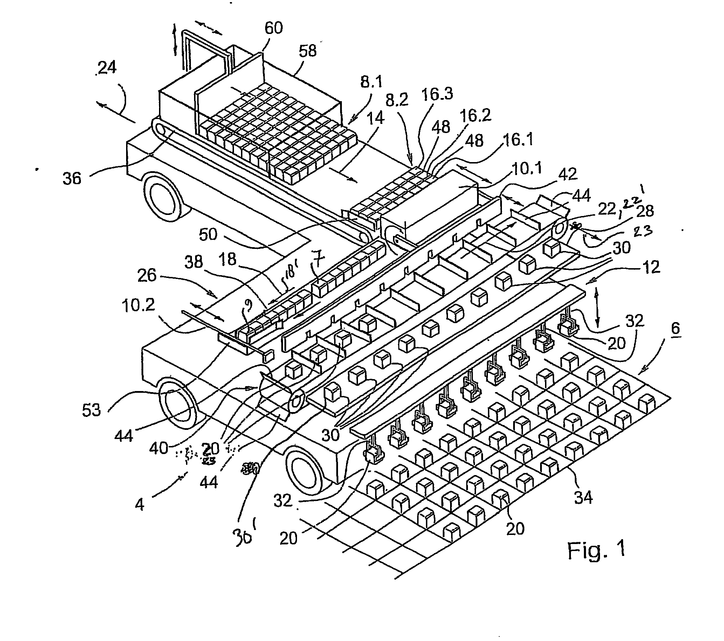

In Fig. 1, a planting machine 2 designed to be mobile in at least one direction of travel 24 is shown for planting germinated or ungerminated plants or seedlings at planting locations 6. The planting machine 2 comprises a transport system 4 for transporting plants supplied to the planting machine 2 in sheets with plants 8.1, 8.2, to deposit locations 30 of the planting machine. The plants in the sheets may be accommodated in (pressed) pots. The planting machine 2 comprises a singulating system 10 with a first singulator 10.1 and a second singulator 10.2 for singulating the sheets 8.1, 8.2 to obtain singulated plants (also referred to as ball plants). The singulating system is provided with at least one breaking mechanism 50 for singulating the sheet with plants by means of breaking, the at least one breaking mechanism being provided with clamping means 50 for clamping at least one of the plants at an underside and a top for breaking the at least one clamped plant loose from at least one of the other plants. Further, the planting machine 2 comprises a planting system 12 for planting plants from the deposit locations in the planting locations 6.

The planting machine 2 is provided with a drive (not shown in the drawing) for advancing the planting machine 2. Furthermore, the planting machine 2 is provided with wheels, which may optionally cooperate with riding rails arranged on the ground.

The transport system 4 is arranged for transporting the sheet with plants to the first singulator 10.1. The first singulator 10.1 is arranged for splitting off rows with plants 16.1, 16.2 or 16.3 from the sheet with plants. The transport system is further arranged for transporting the rows 16.1, 16.2 and 16.3 split off from a sheet, in succession in at least one first row 7, to the second singulator 10.2 for singulating the plants of the split-off rows 16.1, 16.2 and 16.3. The rows with plants that have been split off from a sheet are thus transported further in the at least one row 7 in line (in series). In this example, the longitudinal direction of the split-off rows within the at least one row 7 is directed parallel to the direction of the at least one first row 7. The number of first rows (as a result of the placement in series of the split-off rows within the at least one first row 7) is less than the number of rows that are split off from a sheet by the first singulator. In particular, the number of first rows is equal to one (1). The first singulator is therefore arranged to place the rows with plants split off from one sheet, in line in the at least one first row, in this example behind each other in the longitudinal direction of the split-off rows. The longitudinal direction of a split-off row 16.1, 16.2, 16.3 of plants within the at least one first row 7 is therefore directed parallel to a direction of the first row.

The rows with plants split off from a sheet are transported in series within the at least one first row 7 to the second singulator. The second singulator is arranged for separating in each case one plant from a split-off row with plants.

The transport system is further arranged for transporting the singulated plants to the deposit locations 30. In this example, the transport system is arranged for transporting the singulated plants in at least one second row 25 to the deposit locations. In this example, the number of second rows is equal to the number of first rows 7. The transport system is arranged for forming a buffer of plants 9 by placing the split-off rows upstream of the second singulator 10.2 in line in the at least one row 7. The transport system is arranged for transporting the sheet in a first direction 14 to the first singulator 10.1. The first singulator 10.1 is arranged for splitting off the rows with plants in a split-off direction 18'. The transport system is further arranged for transporting the split-off rows with plants in a second direction 18 to the second singulator 10.2. The split-off direction 18' includes an angle different from zero degrees with the first direction 14. Further, the second direction 18 differs from the first direction 14. Further, in particular, the second direction 18 is at least substantially equal to the split-off direction 18'. Furthermore, in use, the rows 16.1, 16.2 and 16.3 of a sheet have an at least substantially same direction as the split-off direction 18'. Also, in particular, the first direction 14 and the second direction 18 are directed transverse and preferably at least substantially perpendicular to each other. The transport device is further arranged for transporting the singulated plants at least in a third direction 22 to the deposit locations 30 of the planting machine. Preferably, the deposit locations form at least one row in a fourth direction 22'. Preferably, the fourth direction includes an angle different from zero degrees with a direction of travel 24 of the planting machine. Furthermore, preferably, the fourth direction and the direction of travel 24 are directed transverse to and preferably at least substantially perpendicular to each other. Furthermore, the fourth direction 22' preferably includes an angle different from zero degrees with the first direction 14. Also, preferably, the third direction 22 is at least substantially equal to the fourth direction 22'. Also, in particular, the first direction 14 substantially coincides with the direction of travel 24 of the planting machine. Preferably, the direction of travel 24 is opposite to the first direction 14. The transport system in this example is further provided with a deposit shelf 28 mounted on a frame of the planting machine, the transport system being arranged for transporting the respective singulated plants in at least the third direction 22 to the respective deposit locations 30 on the deposit shelf 28. The planting system further comprises a plurality of grippers 32 mounted on a frame of the planting machine. The planting machine is arranged for controlling the grippers, whereby in use a controlled gripper of the plurality of grippers performs a substantially vertical movement whereby a plant is gripped from one of the deposit locations of the deposit shelf and is planted in one of the planting locations 6. The deposit shelf is movable relative to the frame. The planting machine is arranged for controlling the deposit shelf, whereby, in use, after the plants have been gripped from the deposit locations of the shelf by the controlled grippers, the controlled deposit shelf is moved for clearing a space for the vertical movement of the controlled grippers to the planting locations.

When the push-off unit 42 pushes the singulated plants from the third transport device onto the deposit shelf 28, this shelf is disposed next to the third transport device. After the deposit shelf 28 has been filled with the singulated plants, the deposit shelf 28 in this example moves in the direction 23, such that the deposit shelf 28 is situated under the grippers 32. The grippers 32 proceed to come down to grip the singulated plants. After this, the deposit shelf 28 moves in a direction opposite to the direction 23, back to the third transport device. Thus, a space is cleared for the vertical movement of the grippers 32, so that these can move down for the purpose of planting the plants.

It is possible that simultaneously the third transport device is filled with a new generation of plants to be planted for loading the deposit shelf 28 while the grippers 32 perform vertical planting movements for planting a previous generation of plants in the planting locations 6. After the grippers have returned to their original position, the deposit shelf 28 with the new generation of plants can be moved relative to the frame 26 of the planting machine in the direction 23, such that the new generation of plants is situated under the respective grippers. Thereupon, the respective grippers can start a new planting cycle, whereby the new generation of plants 20 is gripped, the deposit shelf 28 is again moved for clearing the space for the vertical movement of the grippers for the new planting cycle. In this way, a very efficient feed-through of plants and a high planting capacity of the planting machine is achieved.

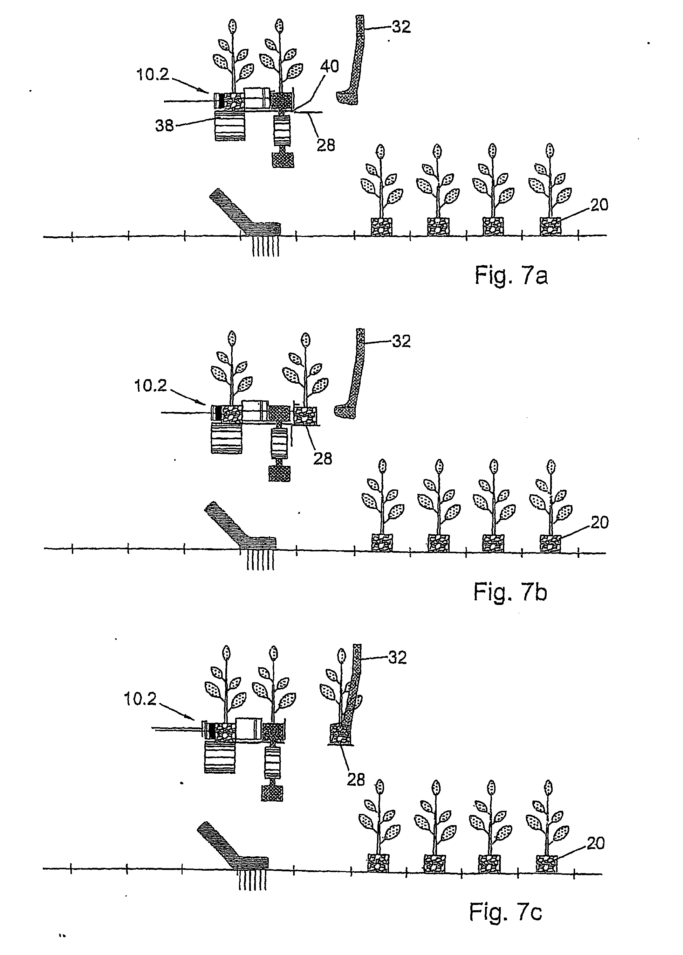

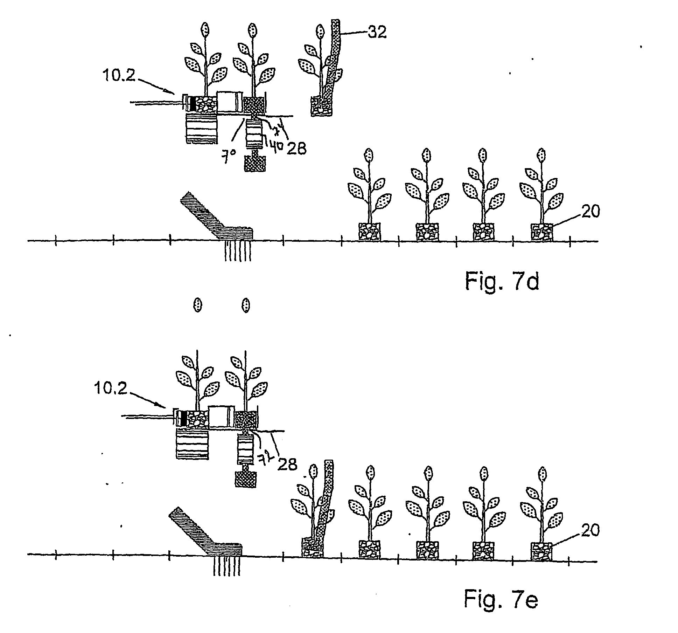

The transport system is provided with a first transport device 36, in this example a conveyor belt, for transporting the sheet with plants in the first direction 14, and a second transport device 38, in this example a conveyor belt, for transporting the row with plants in the second direction 18. The transport system is further provided with a third transport device for transporting the singulated plants in the third direction 22, as well as a push-off unit 42 for pushing the singulated plants from the third transport device to the deposit locations 30 on the deposit shelf 28. In this example, the third transport device is provided with a third transport device with flaps, with compartments being formed between the flaps, which in use are filled with singulated plants. It is noted that naturally also other embodiments of the third transport device are possible, as shown in Fig. 7. The third transport device is then provided with an elongated (two-part) transport plate 70 on which the singulated plants are disposed. Disposed under the transport plate 70 is the third transport device 40 with flaps. In the transport plate 70, there is a slot 72 extending in the longitudinal direction of the plate. The flaps are situated above the plate and are connected with the conveyor belt 40 located under the transport plate 70, by way of a rod-shaped connection 74 which extends through the slot 72. In use, the singulated plants are thus pushed over the plate 70 by the flaps. Other variants of the third transport device are naturally conceivable as well. The transport system is arranged for controlling the speed of the third transport device, whereby in use the third transport device is stopped relative to the frame for the push-off unit 42 to push the singulated plants-off the third transport device to the deposit locations 30 on the deposit shelf 28. The second singulator 10.2 is arranged, while the plants are pushed by the push-off unit from the third transport device to the deposit locations, for pushing a plant singulated by the second singulator to a deposit location 30' located at an end of the deposit shelf. The planting machine is arranged to provide the third transport device with plants via the second singulator 10.2 during the vertical movement performed by the controlled grippers. The first singulator 10.1 is provided with a breaking mechanism for splitting off a row with plants from the sheet with plants by means of breaking. Preferably, here, the first singulator is provided with a clamp 50 for clamping the sheet with plants for the purpose of splitting off a row with plants from the sheets with plants. The second singulator is provided with at least one clamp 54 for clamping the split-off row with plants for the purpose of singulating the plant from the row with plants.

Further, it should be noted that in this example the third direction is oriented at least substantially parallel to a longitudinal direction of the deposit beam. It is noted that the plants in a sheet may be accommodated in pressed pots. The plants are then singulated per pressed pot. However, it is not requisite for the plants to be taken up in pressed pots. It is also possible for the sheets to be provided with separation lines or tear lines beforehand. However, this is not requisite either. In this example, the direction of travel 24 is opposite to the first direction 14. Furthermore, in this example, the third direction 22 is at least substantially perpendicular to the first direction 14. Furthermore, in this example, the second direction 18 is directed at least substantially perpendicular to the first direction 14. Also, the third direction 22 is opposite to the second direction 18. Further, the third direction 22 is at least substantially parallel to the fourth direction 22'. For the sake of clarity, it is stated that this example only involves a particular embodiment concerning the choice of these directions as set out hereinbefore. In this example, the grippers are operated electrically or pneumatically . Other ways of energization are also possible, however.

The planting machine is preferably further provided with a central control unit which, directly or indirectly, is connected with the transport system, the singulating system and the planting system, while the central control unit can be set for a particular planting program, whereby the planting-program determines the pattern of planting locations, and the central control unit is arranged for controlling the transport system, the singulating system and the planting system in conformity with the planting program set. Also, the planting machine may be further provided with a position sensor for determining the position of the planting machine relative to the ground, for instance with the aid of a wire netting or grid provided on the ground. The central control unit preferably controls the drive as well.

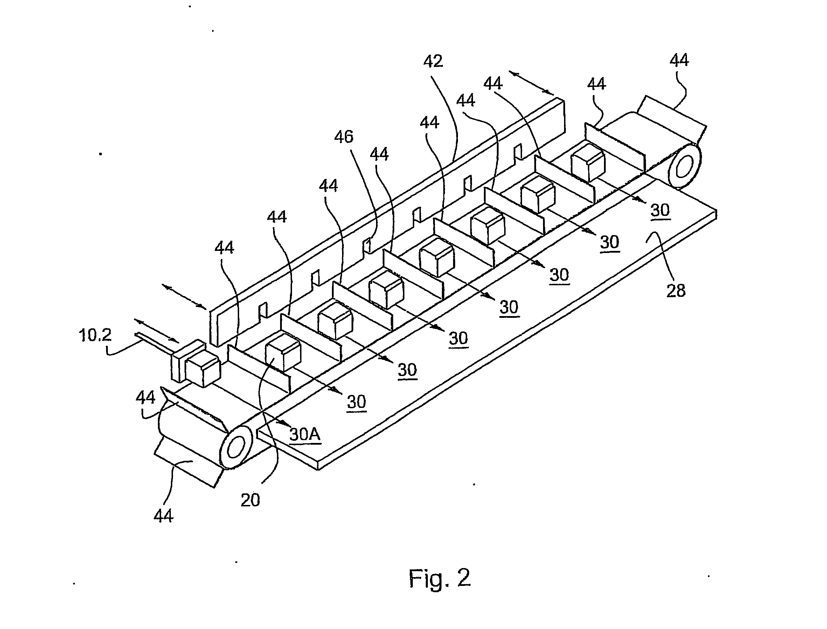

In Fig. 2, the pushing off of split-off plants 20 to deposit locations 30 on the deposit shelf 28 is shown in detail. In the example of Fig. 2, the third transport device 40 is a flap conveyor belt. Before the pushing off of the split-off plants 20 takes place, the third transport device 40 is stopped by the transport system 4. At the moment when the third transport device 40 is at a standstill, the flaps 44 of the third transport device 40 are situated opposite recesses 46 of the push-off unit 42. This makes it possible for the push-off unit 42 to move in a direction perpendicular to the third direction 22, whereby the singulated plants 20 are pushed by the push-off unit 42 to the deposit locations 30 of the deposit shelf 28. The push-off unit 42 can consist, for instance, of a plate with recesses or be formed by brushes.

In the example of Fig. 2, the deposit shelf 28 comprises seven deposit locations 30. One of the seven deposit locations 30.A is located in an extreme position on the deposit shelf 28. In this example, when six consecutive compartments of the third transport device 40 have been filled with plants 20, the third transport device 40 is stopped. Thereupon, as has been described hereinabove, the plants 20 are pushed by the push-off unit 42 from the compartments to the deposit locations 30 on the deposit shelf 28. At the same time, the second singulator 10.2 pushes a split-off plant 20, directly upon split-off, via a compartment to the deposit location 30.A. Thus, the feed-through of the plants 20 to be planted is further optimized for obtaining a maximum planting capacity of the planting machine 2.

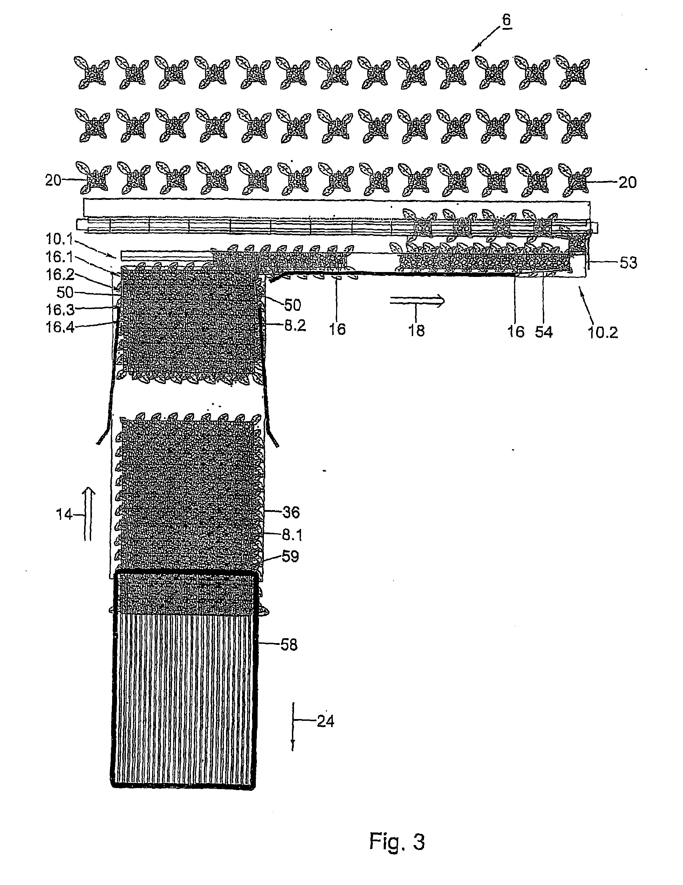

The planting machine 2 is so arranged that the moving third transport device 40 is filled with the plants 20 singulated by the second singulator 10.2 as the plants 20 are being planted by the controlled grippers 32. This means that the second singulator 10.2 virtually without interruption can function for singulating plants 20 from supplied rows 16 of plants (see also Figs. 2 and 3). Also after the third transport device 40 has been stopped, the second singulator 10.2 still splits off a plant 20 (being the last one of the respective generation to be subsequently planted synchronously). As a result, a very high and efficient transit of plants 20 to be planted is realized. Further, by using the second singulator also for pushing off the last split-off plant 20, the width of the planting machine 2 is relatively small. Such a relatively small width is desirable when the planting machine 2 is to function in relatively narrow covered spaces. Furthermore, the planting machine 2 also has limited dimensions in the direction of travel 24. These limited dimensions are realized in that the second conveyor belt 38, the third transport device 40 and the deposit shelf 28 are situated mutually substantially parallel and perpendicular to the direction of travel. This is illustrated in more detail in Fig. 3, showing a schematic top plan view of the operation of the planting machine 2.

As shown schematically in Fig. 3, the first singulator 10.1 is arranged for splitting off rows with plants 16.1, 16.2 or 16.3 oriented perpendicularly to the first direction 14. This involves a sheet with plants 8.2 with predetermined separation lines 48 being introduced at least partly into an open portion of the first singulator 10.1. Thereupon, the sheet with plants 8.2 is clamped by a pair of clamps 50. The clamps of the pair 50 are situated on opposite sides of the sheet with plants 8.2. The clamping of the sheet with plants 8.2 is done to prevent the sheet with plants 8.2 from making it more difficult, due to the propulsive action induced by the slipping first conveyor belt 36, for the first singulator 10.1 to split off a row. The propulsive action of the slipping first conveyor belt 36 is normally desired for obtaining a continuous supply of sheets with plants 8.2. Optionally, the first conveyor belt 36 can be controlled on the basis of a detection signal delivered by a sensor for measuring the supply, or presence, of plants on the first conveyor belt 36. Such a sensor, incidentally, can also be used for the second conveyor belt 38.

As appears from Fig. 3, in accordance with the principle of the operation of the planting machine 2, a very high planting density of the plants 20 to be planted in the planting locations 6 can be achieved. This high planting density can be achieved partly due to the feature that the supplied sheets with plants with a predetermined number of rows 16, which are oriented perpendicularly to the first direction, are split, with split rows 16 being supplied in line to the second singulator 10.2. Thereupon, the plants in the rows 16 are singulated and passed to deposit locations 30. As a result, a regrouping of the singulated plants 20 is achieved, with the number of deposit locations 30 on the deposit shelf 28 determining the number of rows of the planting pattern of the planting locations 6. As a consequence, the number of rows 16 can be independent of the number of the planting pattern. Thus, with a limited number of rows 16 of the sheet 8 of plants that are located in the direction of travel, a much greater number of rows of the planting pattern is possible. Furthermore, owing to the high planting capacity of the planting machine 2 (as described above), also a high density of the number of plants 20 to be planted in the direction of travel is possible.

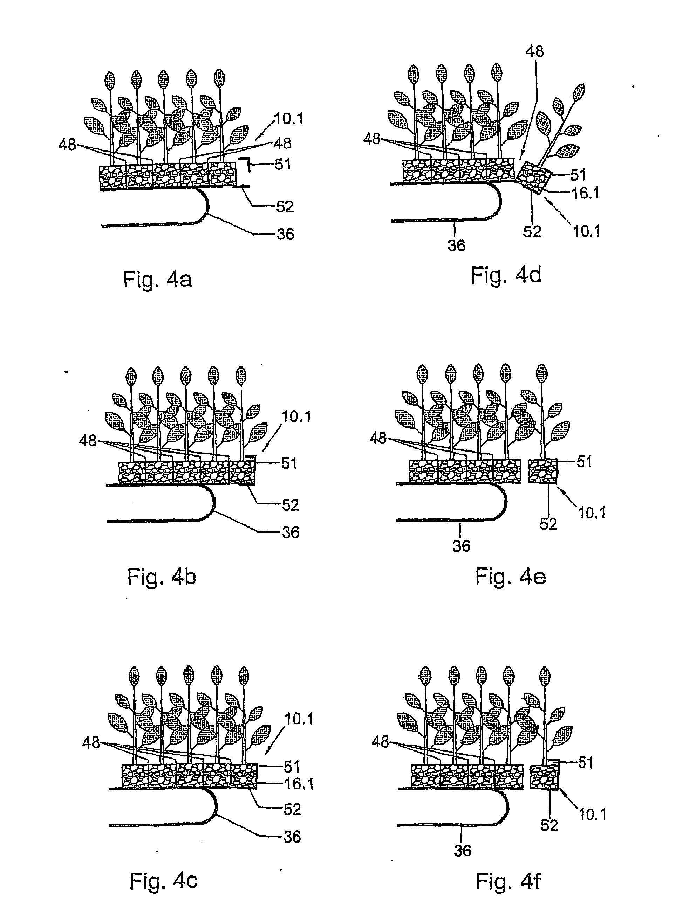

Figs. 4a-4f show in more detail how the splitting off of a row with plants from a sheet with plants proceeds.

In Fig. 4a, it is shown how the first singulator 10.1 receives a sheet with plants 8.2. The first singulator 10.1 is arranged for splitting off a row with plants 16.1 from the sheet with plants by means of breaking, with the first singulator being provided with clamping means 50 for clamping a row with plants of the sheet with plants at an underside and a top, for breaking the clamped row with plants loose from the sheet with plants. The clamping means 50 are arranged for performing a rotary movement for breaking the clamped row with plants loose. The clamping means are provided with a pair of clamps 50 between which, in use, the clamped row with plants is clamped. The breaking mechanism is further provided with a stop 51 which, in use, abuts against a longitudinal side of the clamped row with plants. The stop 51 and an upper clamp of the pair of clamps 50 are mechanically connected with each other.

The sheet 8.2 is propelled against the stop 51 by the first conveyor belt 36 (see Fig. 4b). Thereupon, the sheet with plants 8.2 is clamped by the pair of clamps 50 as described above. The first singulator 10.1 tightly clamps the row with plants 16.1 of the sheet 8.2 between the descending stop 51 and the supporting surface 52 (see Fig. 4c). Next, a joint rotary movement is performed by the stop 51 and the supporting surface 52, whereby the row with plants 16.1 is broken off the sheet with plants 8.2 (see Fig. 4d). As shown in Figs. 4a-4d, the row with plants 16.1 thereby breaks off along a previously provided separation line 48 of the sheet 8.2. Fig. 4e shows that the row broken off by the stop 51 and the supporting surface 52 undergoes a translation in the first direction 14. As a result, the broken-off row, split off entirely, is rendered clear of the sheet 8.2. Finally, Fig. 4f shows that the stop 51 has been moved up, so that the split-off row is not clamped by the first singulator anymore. The split-off row can subsequently be moved, for instance by means of a slide, to the second conveyor belt 38. Thereupon, the split-off row with plants 16.1 can be further transported by the transport system 4 via the second conveyor belt 38 in the second direction 18. The transport system 4 transports split-off rows in the second direction 18 to the second singulator 10.2. Thereupon, the stop 51 and the supporting surface 52 return to the position in Fig. 4a to be filled with a new row with plants.

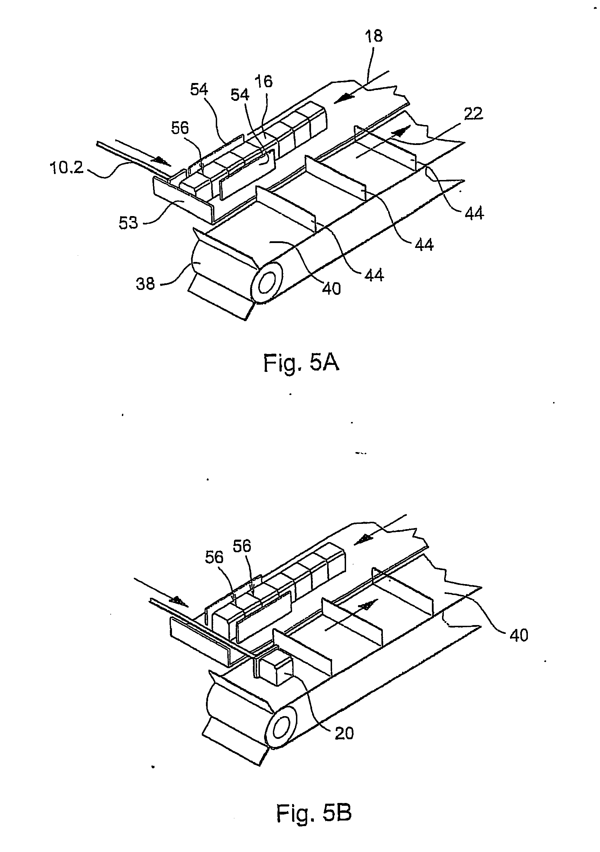

The operation of the second singulator 10.2 is now further elucidated with reference to Figs. 5a and 5b. The split-off row 16 supplied with the second conveyor belt 38 is moved until it comes to a standstill against a stop plate 53. Thereupon, the row 16 is clamped by a pair of clamps 54. Clamping serves to facilitate singulation of a plant. For singulation, the second singulator 10.2 pushes a piston with a pusher plate against the plant 20 to be singulated. The plant 20 to be singulated thereby breaks off from the split-off row along an optional previously provided separation line, and the singulated plant is pushed into a compartment of the third transport device 40 (here: flap belt), as shown in Fig. 5b. In this way, the third transport device 40 can be filled with singulated plants 20. Thus, in Fig. 1, a situation is drawn in which the third transport device 40 is filled with four plants 20 to be planted.

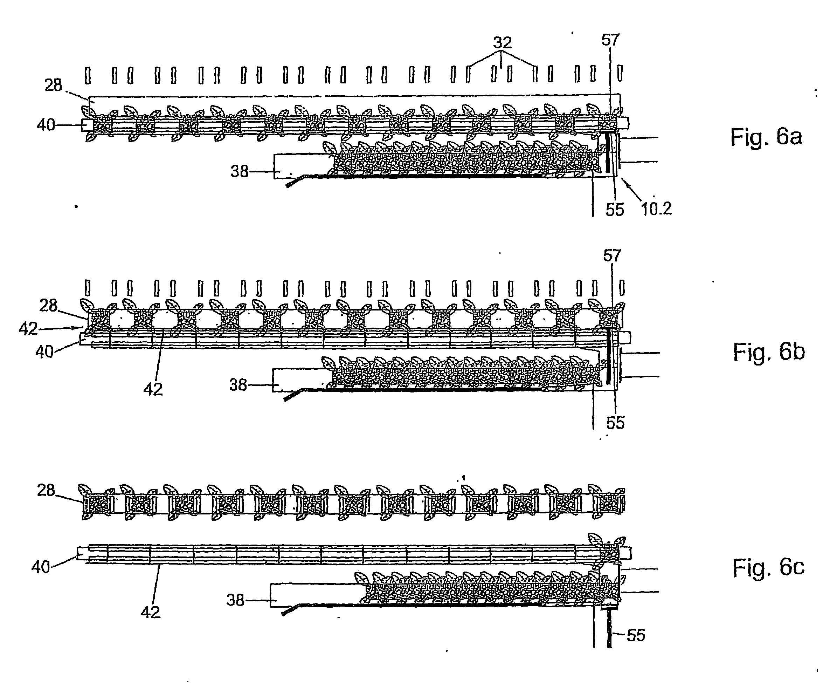

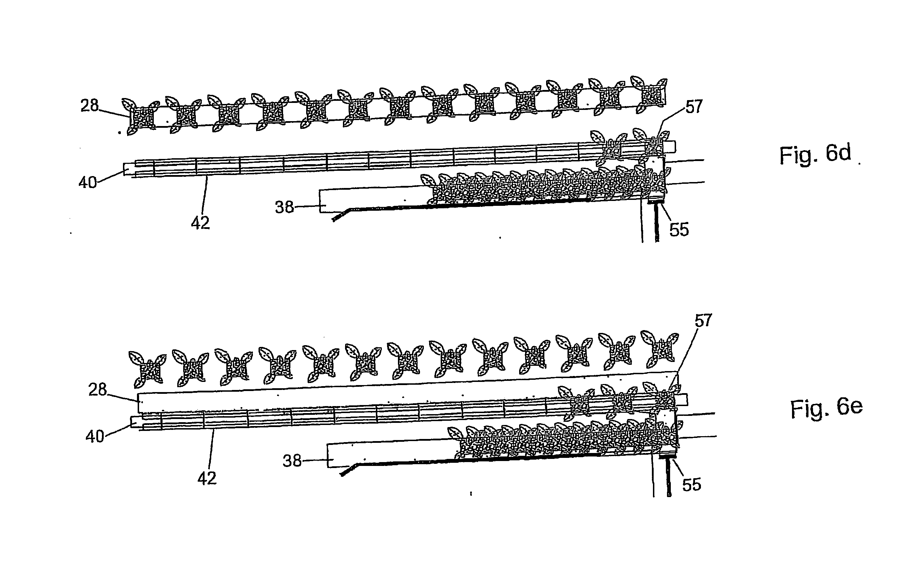

With the respective Figs. 6a-6e and the associated respective Figs. 7a-7e, the cooperation between the second conveyor belt 38, the third transport device 40, the deposit shelf 28, the push-off unit 42 and the grippers 32 of the planting system is further elucidated. Figs. 6a-6e are schematic top plan views and Figs. 7a-7e are schematic side elevations. In the phase of Fig. 6a and Fig. 7a, plants (whether or not accommodated in (pressed) pots) are pushed by the pusher plate (ejector) 55 from the second singulator 10.2 to the compartments of the rotary third transport device 40. When (in this example) thirteen compartments of the third transport device have been filled, the third transport device 40 stops. The pusher plate (or ejector) 55 remains in the "out" position upon the last ejector stroke. Thereupon (Figs. 6b, 7b), a stop 57 of the second singulator 10.2 is lowered to a point under the deposit shelf 28, whereupon the push-off unit 42 pushes all singulated plants 20, except for the plant 20 at the pusher plate 55 of the second singulator 10.2, to the deposit shelf 28. The "last" plant of the generation of plants to be planted, as already mentioned before, has been pushed on to the deposit shelf 28 by the pusher plate 55. Thereafter (Figs.6c, 7c), the push-off unit 42 returns to its original position, and the deposit shelf 28 moves under the grippers 32. The stop 57 moves upwards again, the third transport device 40 starts to rotate again, and the pusher plate (ejector) 55 starts to fill the third transport device 40 again. During the filling of the third transport device 40, the plants 20 are clamped by the grippers 32 (Figs. 6d, 7d), whereupon the deposit shelf moves back for clearing space for the vertical planting movements of the grippers (Figs. 6e,7e). The grippers 32 are now ready, optionally activated by a sensor signal of a position sensor, to plant the plants vertically in a grid.

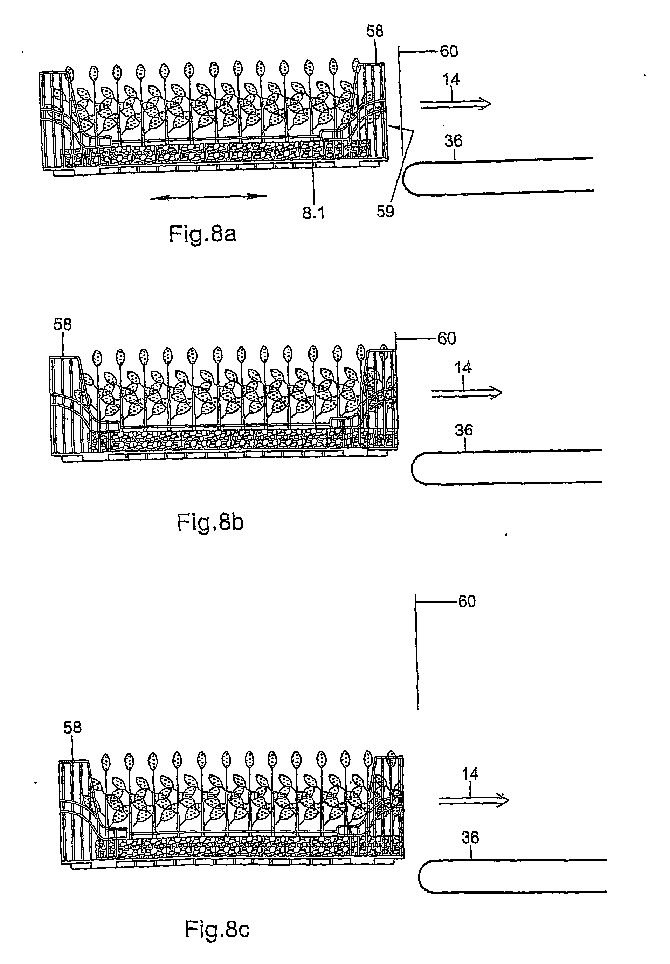

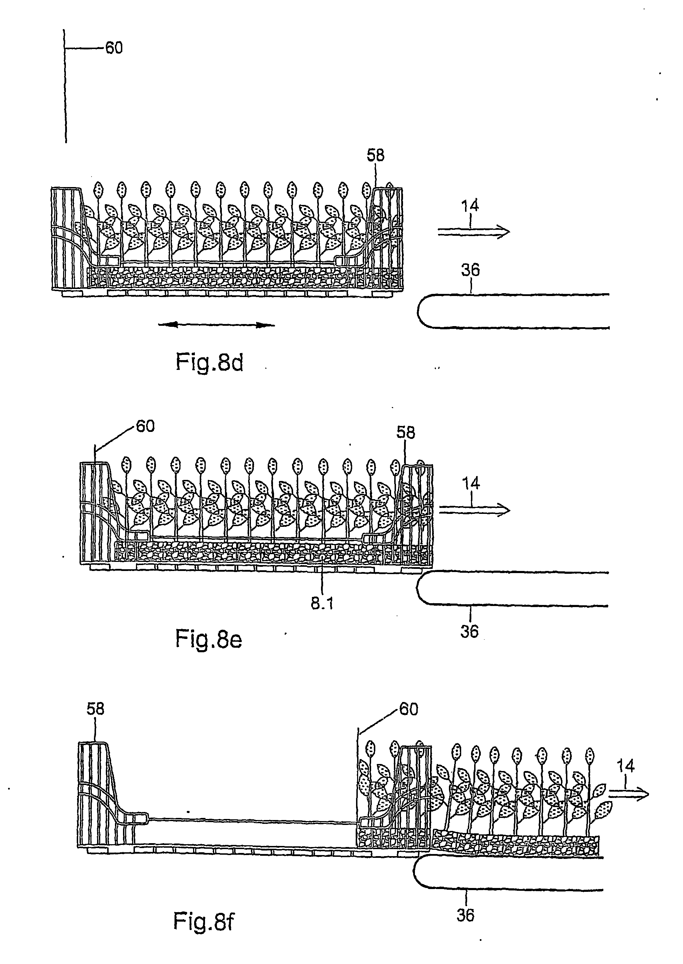

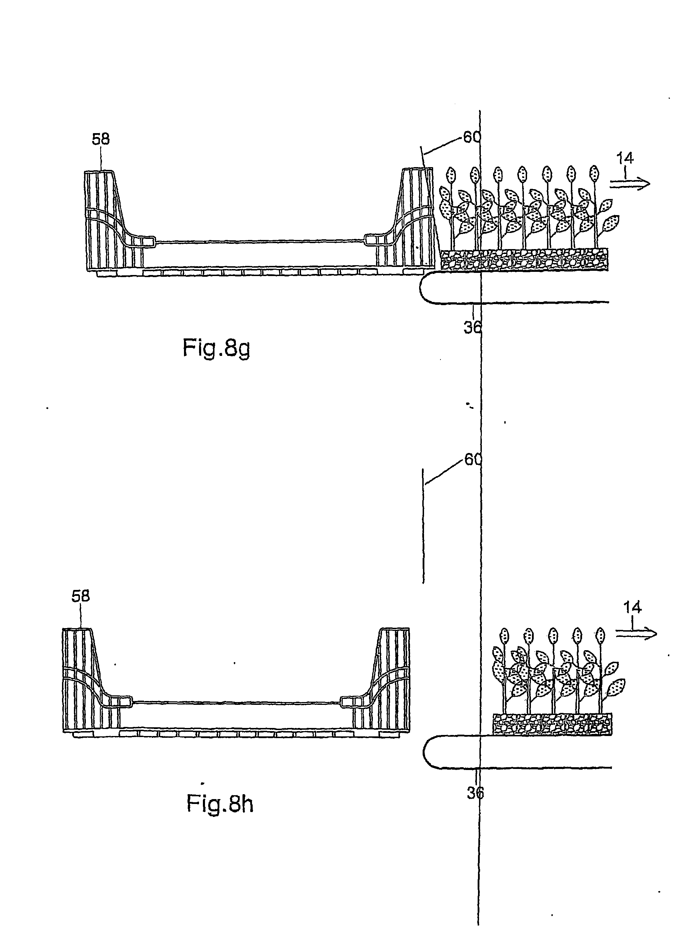

Fig. 8 shows schematically in side elevation how a sheet with plants 8.2 can be supplied to the planting machine 2 in a box 58 with an open front 59 and optionally an open top. The planting machine 2 is provided with a supply system which is provided with a shaking mechanism for shaking the sheet with plants 8.1 loose with respect to the box 58. As shown in more detail in Figs. 8a-8f, the supply system is further provided with a movable slide 60 with which two functions can be performed. The first function of the movable slide 60 is to close off the open front 59 of the box 58 during shaking. The second function of the movable slide 60 is to push the sheet with plants 8.1, after shaking, in the first direction 14 through the open front of the box 58 to the first singulator 10.1 (see Figs. 8f-8h). In Fig. 8a, a sheet with plants 8.1 has been placed in a box 58, with the box sitting clear of the first conveyor belt 36. By the shaking action, the sheet with plants 8.1 is moved against the slide 60 (which at that time is situated at the front of the box 58). As a result, at the back of the box, space is created in which the slide 60 can later be introduced. In order to enable displacement of the slide 60 from the front 59 to the space at the back of the box, the movable slide is movable both in horizontal and in vertical direction. This is further shown in Figs. 8b-8e. In Fig. 8e, the slide 60 has been inserted at the back of the box 58, with the slide 60 pushing the sheet with plants 8.2 through the open front 59 onto the first conveyor belt 36. After the slide 60 has pushed the sheet with plants 8.2 over a certain (predetermined) distance over the first conveyor belt 36, the pushing movement of the slide 60 stops (Fig. 8f). Thereupon (Fig. 8g) the slide 60 makes a pivotal movement and the sheet with plants 8.1 moves on a further bit under a grip of the box. When the box 58 is empty, the slide 60 pivots back, and moves up towards the front 59 of the box 58. The box is carried to the left and can be replaced with a box filled with a new sheet with plants.

The planting machine 2 is provided with a central control unit which, directly or indirectly, is connected with the transport system 4, the singulating system 10 and/or the planting system 12. The central control unit is not shown in the drawing. The central control unit can be set for the use of a particular planting program, whereby the planting program determines the pattern of planting locations 6 in the planting grid 34. The central control unit can then drive the systems of the planting machine 2 in conformity with the planting program set. The central control unit can here be fed with a step signal of a step disc, whose steps correspond to the compartments of the rotary third transport device 40. The step disc is preferably coupled with the drive of the third transport device 40. Thus, the central control unit can control the push times of the pusher plate 55 of the second singulator 10.2 on the basis of *inter alia* the step signal and the planting program. Further, the central control unit is fed, for instance, with a position signal of the position sensor for determining the position of the planting machine 2 relative to the planting grid 34. On the basis of the position signal, the speed of travel of the planting machine 2, and any other parameters, such as the grid dimensions, the central control unit can, for instance, control and mutually tune the speed and timing of the grippers 32, and the speed and timing of the deposit shelf 28, as well as the speeds and-timing of the various conveyor belts and the various singulators.

The central control unit can control the planting machine 2 according to various planting programs, whereby according to some planting programs, for instance, all successive compartments of the third transport device 40 are filled with plants, and whereby, according to other planting programs, according to a particular structure, only specific compartments are filled. This makes it possible for only specific tracks located in the direction of travel of the planting machine 2 to be filled with singulated plants 20. Preferably, the central control unit controls the actuation of the grippers 32 such that only the grippers 32 that are in effect to pick up a singulated plant 20 from a deposit location are controlled.

The planting machine 2 can in a simple manner be provided with a different third transport device 40, whose compartments can have different dimensions. In this way, it is simply possible to adapt the planting machine 2 to other grid dimensions of the planting grid 34 in a direction perpendicular to the direction of travel. The control unit here controls the other systems (transport system, singulating system, planting system) of the planting machine 2 in a manner adapted accordingly. The planting machine 2 can be simply adapted by the central control unit to other grid dimensions in the direction of travel. This involves *inter alia* adjustment of the processing rate of the grippers 32. The grippers 32 are here synchronized and controlled by a position signal of the position sensor. Here, a continuous supply of plants is ensured in that the transport system, controlled by sensors for measuring the presence of plants on the first and second conveyor belt, takes care of a continuous supply. Optionally, the rotary speeds of the conveyor belt are controlled on the basis of these sensors in accordance with an on/off control. Further, the central control unit can control the processing rate of the singulators on the basis of the desired feed-through rate of plants. Also, it is possible for the rotary speeds of the conveyor belts to be adapted by the central control unit to the feed-through of plants according to a continuous fine-adjustment.

The planting machine 2 is preferably provided with a spraying device 62 arranged adjacent the grippers 32 for spraying the gripped plants (whether or not accommodated in (pressed) pots) with a plant protection agent.

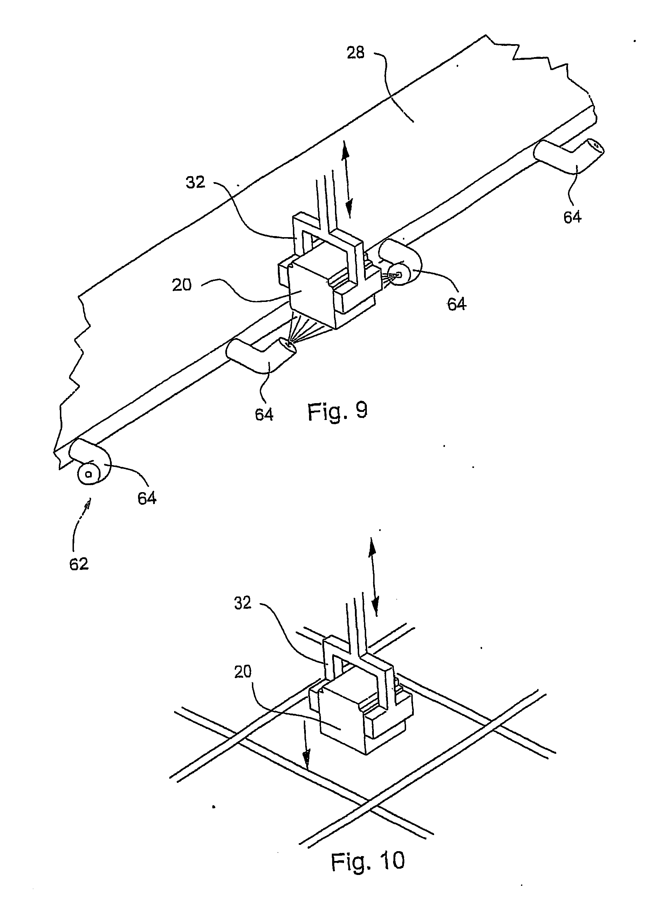

As-shown in Fig. 9, the spray heads 64 of the spraying device 62 are situated adjacent the grippers 32 of the planting system 12. With the spray heads 64, the plant protection agent can be applied, for instance, at the underside and optionally at the lateral side of the plant or at the underside and/or lateral side of the (pressed) pot with a plant 20. The spray heads 64 can be mounted, for instance, at an end of the deposit shelf 28. After the plant 20 has been sprayed by the spraying device 62, the plant 20 can be planted in a planting grid 34. Since it is only the underside of the plant 20 that needs to be sprayed with the spraying device 62, instead of the entire surface of the planting grid 34, a considerable reduction of (harmful) plant protection agents to be used can be accomplished.

The planting machine according to the invention has been elucidated on the basis of a few exemplary embodiments. However, the planting machine is by no means limited to these exemplary embodiments. Thus, it is possible, for instance, for the deposit shelf 28 and/or the second conveyor belt 38 and third transport device 40 to be placed, movably or immovably, at an acute or obtuse angle relative to the first direction 14. Optionally, this enables correction for a planting grid 34 that is not in alignment with the direction of travel 24. Also, it is possible that the planting machine is provided with distance-setting means for changing the mutual distances of the grippers. These distance-setting means can be controlled by the central control unit. again. For gripping the plants from the deposit shelf 28, the grippers are situated at distances that correspond to the distances of the plants in the third transport device. After gripping, the grippers then move at mutual distances that correspond to the planting locations.

## Claims

1. A planting machine (2) for planting germinated or ungerminated plants, comprising a transport system (4) for transporting to deposit locations (30) of the planting machine plants supplied in a sheet (8) with plants to the planting machine, a singulating system (10) for singulating the sheet with plants to obtain singulated plants, the singulating system being provided with at least one breaking mechanism for singulating the sheet with plants by means of breaking, while the at least one breaking mechanism has clamping means for clamping at least one of the plants, and a planting system (12) for planting the singulated plants from the deposit locations (30) in the planting locations (6), the transport system (4) being arranged for transporting the sheet with plants to the singulating system (10) and for transporting the singulated plants to the deposit locations (30), **characterized in that** it includes a first singulator (10.1) for splitting off a row of plants (16) from the sheet (8) with plants by means of breaking, the first singulator (10.1) being provided with the clamping means, which are adapted for clamping at an underside and an upper side of the row of plants (16) of the sheet for breaking the clamped row of plants loose from the sheet, and **in that** the singulating system (10) further comprises a second singulator (10.2) for singulating plants from the split-off rows (16) with plants.

2. A planting machine according to claim 1, **characterized in that** the clamping means are arranged for performing a rotary movement for breaking the clamped row of plants loose.

3. A planting machine according to claim 1 or 2, **characterized in that** the clamping means are provided with a pair of clamps between which, in use, the clamped row with plants is clamped.

4. A planting machine according to claim 1, 2 or 3, **characterized in that** the breaking mechanism is further provided with a stop which, in use, abuts against a longitudinal side of the clamped row with plants.

5. A planting machine according to claims 3 and 4, **characterized in that** the stop and an upper clamp of the pair of clamps are mechanically connected with each other.

6. A planting machine according to any one of claims 1-5, **characterized in that** the transport system (4) is arranged for transporting the sheet with plants to the first singulator (10.1).

7. A planting machine according claim 1, **characterized in that** the second singulator (10.2) is also provided with a breaking mechanism for singulating plants from the split-off rows with plants by means of breaking.

8. A planting machine according to any one of the preceding claims, **characterized in that** the transport system (4) is arranged for transporting the sheet (8) to the first singulator (10.1) in a first direction (14), and for transporting the split-off rows with plants to the second singulator (10.2) in a second direction (18).

9. A planting machine according to claim 8, **characterized in that** the transport system (4) is further arranged for transporting the plants singulated by the second singulator (10.2) at least in a third direction (22) to the deposit locations (30).

10. A planting machine according to claim 9, **characterized in that** the transport system (4) is provided with a deposit shelf (28), while the transport system (4) is arranged for transporting the respective singulated plants to respective deposit locations on the deposit shelf.

## Patentansprüche

1. Pflanzmaschine (2) zum Einpflanzen gekeimter oder ungekeimter Pflanzen, die umfasst:
- ein Transportsystem (4) zum Transport von in einer Folie (8) mit Pflanzen zur Pflanzmaschine gelieferten Pflanzen zu den Ausbringorten (30) der Pflanzmaschine,
- ein Vereinzelungssystem (10) zur Vereinzelung der Folie mit den Pflanzen zur Gewinnung vereinzelter Pflanzen, wobei das Vereinzelungssystem mit mindestens einem Brechmechanismus zur Vereinzelung der Folie mit den Pflanzen durch Brechen versehen ist, und der mindestens eine Brechmechanismus eine Einspanneinrichtung zum Einspannen mindestens einer der Pflanzen aufweist, und
- ein Pflanzsystem (12) zum Einpflanzen der vereinzelten Pflanzen von den Ausbringorten (30) in die Pflanzorte (6), wobei das Transportsystem (4) derart ausgeführt ist, dass es die Folie mit den Pflanzen zum Vereinzelungssystem (10) und die vereinzelten Pflanzen zu den Ausbringorten (30) transportiert,
**dadurch gekennzeichnet, dass** sie umfasst:
- eine erste Vereinzelungseinrichtung (10.1) zum Abtrennen einer Reihe von Pflanzen (16) von der Folie (8) mit den Pflanzen (16) durch Brechen, wobei die erste Vereinzelungseinrichtung (10.1) mit der Einspanneinrichtung versehen ist, die zum Einspannen an der Unterseite und der Oberseite der Reihe von Pflanzen (16) der Folie zum Abbrechen der eingespannten Reihe von Pflanzen von der Folie ausgeführt ist, und dass das Vereinzelungssystem (10) ferner umfasst:
- eine zweite Vereinzelungseinrichtung (10.2) zum Vereinzeln von Pflanzen von den abgetrennten Reihen (16) mit Pflanzen.

2. Pflanzmaschine nach Anspruch 1, **dadurch gekennzeichnet, dass** die Einspanneinrichtung so gestaltet ist, dass sie eine Drehbewegung zum Abbrechen der eingespannten Reihe der Pflanzen ausführen kann.

3. Pflanzmaschine nach Anspruch 1 oder 2, **dadurch gekennzeichnet, dass** die Einspanneinrichtung mit zwei Einspannklemmen versehen ist, zwischen denen im Betrieb die eingespannte Reihe mit Pflanzen eingeklemmt ist.

4. Pflanzmaschine nach Anspruch 1, 2 oder 3, **dadurch gekennzeichnet, dass** der Brechmechanismus ferner mit einem Anschlag versehen ist, der im Betrieb an einer Längsseite der eingespannten Reihe mit Pflanzen anstößt.

5. Pflanzmaschine nach den Ansprüchen 3 und 4, **dadurch gekennzeichnet, dass** der Anschlag und die obere der zwei Einspannklemmen mechanisch miteinander verbunden sind.

6. Pflanzmaschine nach einem der Ansprüche 1 bis 5, **dadurch gekennzeichnet, dass** das Transportsystem (4) zum Transport der Folie mit Pflanzen zur ersten Vereinzelungseinrichtung (10.1) ausbildet ist.

7. Pflanzmaschine nach Anspruch 1, **dadurch gekennzeichnet, dass** auch die zweite Vereinzelungseinrichtung (10.2) mit einem Brechmechanismus zur Vereinzelung der Pflanzen von den abgetrennten Reihen mit Pflanzen durch Brechen versehen ist.

8. Pflanzmaschine nach einem der vorhergehenden Ansprüche, **dadurch gekennzeichnet, dass** das Transportsystem (4) für einen Transport der Folie (8) zur ersten Vereinzelungseinrichtung (10.1) in einer ersten Richtung (14) und zum Transport der abgetrennten Reihen mit Pflanzen zur zweiten Vereinzelungseinrichtung (10.2) in einer zweiten Richtung (18) ausgebildet ist.

9. Pflanzmaschine nach Anspruch 8, **dadurch gekennzeichnet, dass** das Transportsystem (4) ferner zum Transport der von der zweiten Vereinzelungseinrichtung (10.2) vereinzelten Pflanzen in mindestens einer dritten Richtung (22) zu den Ausbringorten (30) ausgebildet ist.

10. Pflanzmaschine nach Anspruch 9, **dadurch gekennzeichnet, dass** das Transportsystem (4) mit einer Ausbringplatte (28) versehen ist und das Transportsystem (4) zum Transport der jeweiligen vereinzelten Pflanzen zu den jeweiligen Ausbringorten auf der Ausbringplatte ausgebildet ist.

## Revendications

1. Machine à planter (2) pour planter des plants germés ou non germés, comportant un système de transport (4) pour transporter vers des emplacements de dépôt (30) de la machine à planter des plants fournis par une plaque (8) avec des plants vers la machine à planter, un système de séparation (10) pour séparer la plaque avec les plants pour obtenir des plants individuels, le système de séparation étant pourvu d'au moins un mécanisme de découpe pour séparer la plaque avec les plants au moyen d'une découpe, tandis que le mécanisme de découpe a des moyens de serrage pour serrer au moins un des plants, et un système à planter (12) pour planter les plants individuels depuis les emplacements de dépôt (30) dans les emplacements à planter (6), le système de transport (4) étant agencé pour transporter la plaque avec les plants vers le système de séparation (10) et pour transporter les plants individuels vers les emplacements de dépôt (30), **caractérisé en ce qu'**il comprend un premier séparateur (10.1) pour découper un rang de plants (16) de la plaque avec les plants (8) au moyen d'une découpe, le premier séparateur (10.1) étant pourvu des moyens de serrage, lesquels sont adaptés pour serrer d'un côté inférieur et d'un côté supérieur le rang de plants (16) de la plaque pour découper le rang de plants serré détaché de la plaque, et **en ce que** le système de séparation (10) comprend en outre un second séparateur (10.2) pour séparer les plants des rangs de plants (16) découpés.

2. Machine à planter selon la revendication 1, **caractérisé en ce que** les moyens de serrage sont agencés pour effectuer un mouvement rotatif afin de découper le rang de plants serré détaché.

3. Machine à planter selon la revendication 1 ou 2, **caractérisé en ce que** les moyens de serrage sont pourvus d'une paire de branches de serrage entre lesquelles, en utilisation, le rang de plants serré est serré.

4. Machine à planter selon la revendication 1, 2 ou 3, **caractérisé en ce que** le mécanisme de découpe est en outre pourvu d'une butée qui, en utilisation, s'appuie contre un côté longitudinal du rang de plants serré.

5. Machine à planter selon les revendications 3 et 4, **caractérisé en ce que** la butée et une branche supérieure de serrage de la paire de branches de serrage sont reliées mécaniquement l'une à l'autre.

6. Machine à planter selon l'une quelconque des revendications 1-5, **caractérisé en ce que** le système de transport (4) est agencé pour transporter la plaque avec les plants au premier séparateur (10.1).

7. Machine à planter selon la revendication 1, **caractérisé en ce que** le second séparateur (10.2) est également pourvu d'un mécanisme de découpe pour séparer les plants des rangs de plants coupés au moyen d'une découpe.

8. Machine à planter selon l'une quelconque des revendications précédentes, **caractérisé en ce que** le système de transport (4) est agencé pour transporter la plaque (8) vers le premier séparateur (10.1) dans une première direction (14), et pour transporter les rangs de plants coupés vers le second séparateur (10.2) dans une seconde direction (18).

9. Machine à planter selon la revendication 8, **caractérisé en ce que** le système de transport (4) est en outre agencé pour transporter les plants individuels par le second séparateur (10.2) au moins dans une troisième direction (22) vers les emplacements de dépôt (30).

10. Machine à planter selon la revendication 9, **caractérisé en ce que** le système de transport (4) est pourvu d'un plateau de dépôt (28), tandis que le système de transport (4) est agencé pour transporter les plants individuels respectifs vers les emplacements de dépôt respectifs sur le plateau de dépôt.
